# EUROPÄISCHE PATENTSCHRIFT

(11) **EP 0 940 424 B1**
(45) Veröffentlichungstag und Bekanntmachung des Hinweises auf die Patenterteilung: **18.09.2002**
(21) Anmeldenummer: 99103342.4
(22) Anmeldetag: 20.02.1999
(51) Int. Cl.: C08J 3/22

(54) **Verfahren zur Herstellung von Masterbatchen, die Kurzfasern oder Pulps enthalten**
Process for preparing masterbatches containing short fibres or pulp
Procédé pour la préparation d'un prémélange contenant des fibres ou des pulpes

(30) Priorität: 06.03.1998 DE 19809670
(43) Veröffentlichungstag der Anmeldung: 08.09.1999
(73) Patentinhaber: RHEIN-CHEMIE RHEINAU GmbH, 68219 Mannheim (DE)
(72) Erfinder: Kleinknecht, Harald, 55232 Alzey (DE); Schuch, Andreas Dr., 68723 Schwetzingen (DE); Degen, Iris, 68723 Schwetzingen-Hirschacker (DE)
(74) Vertreter: Steiling, Lothar, Dr.

(56) Entgegenhaltungen:
- EP-A- 0 390 147
- PATENT ABSTRACTS OF JAPAN vol. 008, no. 041 (C-211), 22. Februar 1984 (1984-02-22) & JP 58 201807 A (MITSUBISHI MONSANTO KASEI KK), 24. November 1983 (1983-11-24)
- PATENT ABSTRACTS OF JAPAN vol. 005, no. 140 (C-070), 4. September 1981 (1981-09-04) & JP 56 073649 A (NITTO BOSEKI CO LTD), 18. Juni 1981 (1981-06-18)
- PATENT ABSTRACTS OF JAPAN vol. 1996, no. 02, 29. Februar 1996 (1996-02-29) & JP 07 267689 A (MITSUBISHI RAYON CO LTD), 17. Oktober 1995 (1995-10-17)

## Beschreibung

Die Erfindung betrifft ein Verfahren zur Herstellung von Masterbatchen mit Kurzfasern oder Pulps sowie deren Verwendung.

Der Einsatz von Kurzfasern mit Faserlängen von einigen Mikrometern bis zu mehreren Millimetern in Polymermischungen ist häufig eingeschränkt oder nicht möglich, weil sich die Fasern nicht ausreichend in die Polymermatrix einmischen oder dispergieren lassen. Dies trifft besonders auf einige Typen von hochwertigen Fasern, wie z.B. Aramidfasern bzw. Aramidfaserpulp zu.

Die zu verwendenden Kurzfasern bzw. Pulps liegen üblicherweise als verknäulte, watteartige Bündel vor, die sich nicht oder nur unvollständig mit den üblichen Mischverfahren in einer Polymermatrix, insbesondere Elastomermischungen. einarbeiten und verteilen lassen.

In der Vergangenheit sind verschiedene Verfahren zur Aufbereitung der Fasern entwickelt worden, um die Einarbeitbarkeit der Fasern zu verbessern. So wird beispielsweise die Herstellung von Masterbatchen diverser Polymere unter Zusatz von weiteren Hilfsstoffen, neben Fasern, in Mischaggregaten durchgeführt.

Nachteilig an dem Verfahren ist, daß eine vollständige Benetzung und Dispergierung der Faser (Auflösung der Faserknäule) nicht gewährleistet ist, so daß sogenannte Fasernester im Polymer vorliegen.

In WO 94/24 193 (PCT/US 94/03991) wird die Herstellung eines Masterbatches unter Verwendung von Lösungsmitteln beschrieben. Das Polymer wird in einer bis zu 4-fachen Menge an Lösungsmittel gelöst. Danach werden die Fasern in eine bis zu 20-fache Menge dieser Lösung gegeben. Anschließend wird das Lösungsmittel abgedampft. Das Polymer bleibt auf der Faser zurück. Ist die Menge an Polymer entsprechend groß (mindestens 50 % der eingesetzten Fasermengen), liegt anschließend ein Masterbatch vor.

Nachteilig hierbei ist, daß das Polymer zuerst in großen Lösungsmittelmengen gelöst werden muß, um darin dann die Fasern aufzunehmen. Danach muß das Lösungsmittel wieder abgedampft werden. Dieses ist sowohl ökonomisch als auch ökologisch wenig sinnvoll.

Aufgabe war es daher, ein Verfahren zur Verfügung zu stellen, das es gestattet, Masterbatche auf einfache Weise herzustellen, in denen Kurzfasern homogen dispergiert sind und in denen keine sogenannten Fasernester vorliegen.

Diese Aufgabe konnte mit dem erfindungsgemäßen Verfahren gelöst werden.

Gegenstand der vorliegenden Erfindung ist ein Verfahren zur Herstellung von Fasern enthaltenden Polymermasterbatchen, welches dadurch gekennzeichnet ist, daß
a) Fasern einer Länge bis zu 20 mm, vorzugsweise zwischen 0,2 und 5 mm, in einem 3- bis 20-fachen, vorzugsweise einem 5- bis 15-fachen, gewichtsmäßigen Überschuß an Wasser aufgeschlämmt und dispergiert werden,
b) eine Reaktionskomponente des herzustellenden Polymeren unter Rühren zur Dispersion aus a) zugegeben wird,
c) das Wasser mechanisch entfernt wird, vorzugsweise durch Filtration oder Zentrifugation,
d) das Faser/Reaktionskomponentengemisch aus c) getrocknet wird,
e) gegebenenfalls eine oder mehrere weitere Reaktionskomponenten des herzustellenden Polymeren zum Gemisch aus d) gegeben werden, und dann polymerisiert wird, so daß das gewünschte Masterbatch entsteht.

Bei der Herstellung eines Polymermasterbatches, bei dem das Polymer aus einer Reaktionskomponente hergestellt wird, entfällt die Zugabe der weiteren Reaktionskomponente(n) unter Schritt e). Die Polymerisation erfolgt z.B. durch Erhitzen oder durch Strahlung. Es handelt sich bei dieser Variante des erfindungsgemäßen Verfahrens z.B. um die Herstellung von Polyethylen-, Polypropylen-, Polystyrol- oder Polyphenylensulfidmasterbatchen mit Fasern.

Bei der Herstellung von z.B. Polyurethanmasterbatchen kann beispielsweise das entsprechende Polyol zur Dispersion unter b) gegeben werden, während das entsprechende Isocyanat dann zum Gemisch aus d) gegeben wird. In solch einem teilweise oder vollständig polymerisierten Masterbatch liegen die Fasern homogen verteilt vor. Die Trocknung unter d) erfolgt vorzugsweise bis auf einen Gehalt an Wasser von <0,5 Gew.-%, vorzugsweise <0,1 Gew.-%.

In der wäßrigen Dispersion können auch Füllstoffe, Hilfsstoffe, Vulkanisationsagenzien, Weichmacher oder sonstige Kautschukzusatzstoffe zusammen mit der Faser dispergiert werden.

Die Vernetzung des auf die Fasern aufgebrachten Prepolymeren kann auf unterschiedliche Weise erfolgen. Es kann z.B. eine Polyaddition stattfinden (Vernetzung über Diisocyanate, Vernetzung ungesättigter Kohlenwasserstoffe mit Dicarbonsäuren etc.), eine Vulkanisation oder dergleichen oder eine Polymerisation des Prepolymeren durch physikalische Vernetzung, wie beispielsweise Strahlenhärtung. Bei der letzten Variante kann auf das Aufbringen einer zweiten Komponente verzichtet werden.

Mit üblichen Misch- und Formgebungswerkzeugen, wie z.B. Walzwerken, kann das Masterbatch bei Bedarf (vor der Verwendung beim Kunden) in unterschiedliche Applikationsformen, wie z.B. Granulate, Felle oder Slabs umgeformt werden.

Der Masterbatch kann dann, geformt oder ungeformt, in der gewünschten Menge einer Polymermischung oder Gummimischung in üblichen Mischaggregaten beim Anwender zugemischt werden.

Spezielle Vorteile bietet das erfindungsgemäße Verfahren dadurch, daß viele Fasern oder Pulps bei der Herstellung einen wäßrigen Verfahrensschritt beinhalten, so daß sich das erfindungsgemäße Verfahren an dieser Stelle direkt anschließen kann.

Insbesondere Aramidfasern können auf diese Weise gut in einem Masterbatch dispergiert werden.

Alle möglichen Arten von Masterbatchen (wie z.B. Polyurethan, Polyether, Polyester etc.) mit Fasern (wie z.B. Polyethylen-, Nylon-, Polyesterfasern etc.) können mit dem erfindungsgemäßen Verfahren hergestellt werden.

Die Erfindung soll anhand der nachfolgenden Beispiele näher erläutert werden.

### Beispiele

### Herstellung eines dispergierten Masterbatches durch Einbringen einer prepolymeren Substanz in die Suspension aus Wasser und Fasern und anschließende Polymerisation

| Komponenten und Mengen: | | |
|---|---|---|
| Fasern | Twaron® Pulp 1095 | = 100 Gew.-Teile |
| Reaktionskomponente | Ricinusöl OR | = 100 Gew.-Teile |
| Dispergiermedium | Leitungswasser | = 400 Gew.-Teile |

Die Fasern werden als Trockensubstanz vorgelegt. Warmes Leitungswasser wird zudosiert, und mittels eines Dissolvers wird eine homogene Suspension hergestellt.

| Reaktionsbedingungen: | |
|---|---|
| Temperatur | ca. 40°C |
| Dauer | 45 min. |
| Drehzahl/Dissolver | ca. 3000/min. |
| Geometrie (Durchmesser der Dissolverscheibe) | 7 cm |

Das Ricinusöl OR wird langsam zu der mittels Dissolver sehr stark gerührten Suspension gegeben. Die Homogenisierung wird auch nach der vollständigen Ölzugabe fortgesetzt, dabei wird das Öl vollständig von der Faser aufgenommen (optische Beurteilung).

| Reaktionsbedingungen: | |
|---|---|
| Dauer der Ölzugabe | 5 min. |
| anschließende Homogenisierung | 40 min. |
| Phasenseparation | das Wasser wird abdekantiert |
| Trocknung | bei ca. 20 mbar und 80°C |
| Dauer | 4 Tage |

### Vernetzung 1: 35 % der maximal möglichen Vernetzung (bezogen auf die OH-Zahl des Ricinusöls)

| Komponenten und Mengen: | |
|---|---|
| Fasern, aufbereitet (s.o.) | = 100 Gew.-Teile |
| Ricinusöl OR | = 50 Gew.-Teile |
| Dioctyladipat (Weichmacher) | = 50 Gew.-Teile |
| Diphenylmethandiisocyanat | = 14 Gew.-Teile |
| Di-n-butylzinnacetat (Katalysator) | = 0,2 Gew.-Teile |

Die aufbereiteten Fasem werden im Kneter vorgelegt. Unter ständigem Kneten wird das Ricinusöl OR eingetragen, anschließend wird Dioctyladipat unter den gleichen Bedingungen zudosiert.

| | |
|---|---|
| Kneter-Typ | Schaufelkneter |
| Hersteller | Werner und Pfleiderer |
| Knetereinstellung | 1,5 Skalenteile |
| Temperatur | ca. 20°C |
| Mischungsdauer | 20 min. |

Nach dem Mischen wird das Isocyanat zugegeben. Nach der vollständigen Isocyanatzugabe wird der Vemetzungskatalysator Di-n-butylzinnacetat zugetropft und die gesamte Mischung erneut homogenisiert.

| | |
|---|---|
| Knetereinstellung | 2,5 Skalenteile |
| Mischungsdauer | 30 min. |
| Erscheinungsbild | gelbliche, lockere Flocken |

### Vernetzung 2: 200 % der maximal möglichen Vernetzung (bezogen auf die OH-Zahl des Ricinusöls)

| Komponenten und Mengen: | |
|---|---|
| Fasern, aufbereitet (s.o.) | = 50 Gew.-Teile |
| Dioctyladipat (Weichmacher) | = 100 Gew.-Teile |
| Diphenylmethandiisocyanat | = 20 Gew.-Teile |
| Di-n-butylzinnacetat | = 0,2 Gew.-Teile |

Die aufbereiteten Fasern werden im Kneter vorgelegt. Unter ständigem Kneten wird die Mischung der anderen Komponenten eingetragen.

| | |
|---|---|
| Kneter-Typ | Schaufelkneter |
| Hersteller | Werner und Pfleiderer |
| Knetereinstellung | 1.5 Skalenteile |

| | |
|---|---|
| Temperatur | ca. 20°C |
| Mischungsdauer | 30 min. |
| Erscheinungsbild | Flockenbildung |

## Patentansprüche

1. Verfahren zur Herstellung eines Polymermasterbatches, das Kurzfasern oder Pulps enthält, **dadurch gekennzeichnet, daß**
a) Fasern einer Länge bis zu 20 mm in einem 3- bis 20-fachen gewichtsmäßigen Überschuß an Wasser aufgeschlämmt und dispergiert werden,
b) eine Reaktionskomponente des herzustellenden Polymeren unter Rühren zur Dispersion aus a) zugegeben wird,
c) das Wasser mechanisch entfernt wird,
d) das Faser/Reaktionskomponenten-Gemisch aus c) getrocknet wird,
e) gegebenenfalls eine oder mehrere weitere Reaktionskomponenten des herzustellenden Polymeren zum Gemisch aus d) gegeben werden und dann polymerisiert wird, so daß das gewünschte Masterbatch entsteht.

2. Verwendung des gemäß Anspruch 1 hergestellten Polymermasterbatches zur Herstellung einer Polymer- oder Gummimischung.

## Claims

1. Process for the production of a polymer masterbatch which contains short fibres or pulps **characterised in that**
a) fibres of a length of up to 20 mm are suspended and dispersed in a 3 to 20 times excess by weight of water,
b) a reaction component of the polymer to be produced is stirred into the dispersion from a),
c) the water is removed mechanically,
d) the fibre/reaction component mixture from c) is dried,
e) optionally one or more further reaction components of the polymer to be produced are added to the mixture from d) and then polymerised, such that the desired masterbatch is obtained.

2. Use of the polymer masterbatch produced according to claim 1 for the production of a polymer or rubber composition.

## Revendications

1. Procédé de préparation d'un prémélange polymère qui contient des fibres courtes ou de la pulpe, **caractérisé en ce que** :
a) les fibres d'une longueur de maximum 20 mm sont mises en suspension dans un excès d'eau de 3 à 20 fois le poids et sont dispersées;
b) un composant réactionnel du polymère à préparer est ajouté sous agitation à la dispersion constituée de a);
c) l'eau est éliminée mécaniquement;
d) le mélange fibre/composants réactionnels constitué de c) est séché, et
e) le cas échéant, un ou plusieurs autres composants réactionnels du polymère à préparer sont ajoutés au mélange constitué de d), puis polymérisés, de sorte qu'on obtient le prémélange souhaité.

2. Utilisation du prémélange polymère préparé selon la revendication 1, pour la préparation d'un mélange polymère ou de caoutchouc.
